# EUROPEAN PATENT SPECIFICATION

(11) **EP 3 644 396 B1**
(45) Date of publication and mention of the grant of the patent: **28.01.2026**
(21) Application number: 18202785.4
(22) Date of filing: 26.10.2018
(51) Int. Cl.: H01M 50/209, H01M 50/284, H01M 50/296, H01M 50/507, H01M 50/30

(54) **BUSBAR FOR A BATTERY MODULE AND BATTERY MODULE**
STROMSCHIENE FÜR EIN BATTERIEMODUL SOWIE BATTERIEMODUL
BARRE OMNIBUS POUR UN MODULE DE BATTERIE ET MODULE DE BATTERIE

(43) Date of publication of application: 29.04.2020
(73) Proprietor: Samsung SDI Co., Ltd., Gyeonggi-do 17084 (KR)
(72) Inventor: Weinberger, Martin, 9063 Maria Saal (AT); Kraker, Martin, 8052 Graz (AT); Blaznik, Matic, 2000 Maribor (SI); Killmann, Jörg, 8052 Graz (AT)
(74) Representative: Gulde & Partner

(56) References cited:
- EP-A1- 3 624 220
- WO-A1-2015/144542
- JP-A- 2010 205 509
- JP-A- 2012 243 689
- US-A1- 2011 223 776
- US-A1- 2014 008 781
- US-A1- 2017 125 770

## Description

### Field of the Invention

The present invention relates to a busbar for a battery module, particularly to a low-height, flexible busbar for a compact battery module. The invention further relates to a battery module, particularly to a battery module comprising such low-height and flexible busbars.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while highcapacity rechargeable batteries are used as the power supply for electric or hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with one or more electric consumers for forming a battery system.

To provide electrical integration of a battery system in modular designs either submodules with a plurality of cells connected in parallel are connected in series *(XsYp)* or submodules with a plurality of cells connected in series are connected in parallel *(XpYs). XsYp* type submodules can generate high voltages and *XpYs* type submodules the capacitance of the cells add up and thus *Xp Ys* type submodules are mostly used for low capacitance cells.

For electrically interconnecting the battery cells and/or battery submodules of a battery module, the latter usually comprises a plurality of busbars. These busbars may be further configured to be connected to the battery module terminals for allowing the supply of external loads with the current provided by the battery module. Therein, the design of the busbars depends on the design of the interconnected battery cells and, in the case of interconnected battery submodules, on the specific *XsYp-* or Xp Ys-configuration of the battery module.

Manifold designs for such busbars are known from the prior art, some of which take into account further aspects such as e.g. the integration of shunt resistors in the busbars or cell swelling compensation during the operation of the battery module. However, common busbars according to the prior art are often simple bar-shaped aluminum strips allowing solely for more simple battery module configurations or comprise a complex three-dimensional shape that contributes significantly to the overall height of the battery module.

WO 2015/144542 A1 discloses battery cells connected via flat busbars comprising contact regions separated by a slot. US 2011/223776 A1 discloses an energy system including cylindrical power cells and upper and lower interconnects for connecting the power cells. JP2012/243689A discloses a plurality of battery cells connected by busbars comprising incisions and protrusion parts of substantially the same area as the incisions. EP 3624220 A1 discloses a busbar having a first connecting portion that is connected to a first battery of a battery module, a second connecting portion that is connected to a second battery, and a first main portion that connects the first connecting portion and the second connecting portion, and wherein the first connecting portion and the second connecting portion are positioned at the same side of the first main portion in a transverse direction. US 20170125770 A discloses a rechargeable battery module including a plurality of unit cells arranged along a first direction; a bus bar holder on the unit cells; a bus bar in the bus bar holder electrically connecting the unit cells, wherein the bus bar comprises a first member extending in the first direction and connected to electrode terminals of the unit cells, and a second member connected to the first member.

It is thus an object of the present invention to overcome or reduce at least some of the drawbacks of the prior art and to provide a busbar for a battery module that allows for reducing mechanical stress within a battery module as well as for a compact size thereof.

### Summary of Invention

One or more of the drawbacks of the prior art could be avoided or at least reduced by means of the present invention. In particular, a busbar for a battery module is provided, wherein the battery module comprises a plurality of battery cells that are aligned in a lengthwise direction of the battery module. With respect to the battery cells and their alignment within the battery module, the battery module may be configured like a battery module of the prior art. The busbar of the present invention comprises a busbar body portion that is configured to extend in an extension direction thereof, preferably in (along) a lengthwise direction of a battery module. Therein, the bus bar body portion comprises a length in the extension direction that is configured for connecting cell terminals of at least four battery cells of the battery module. The busbar of the invention is of planar shape.

Preferably, the length of the busbar body portion corresponds to at least two times, preferably to at least three times, the extension of a battery cell of the battery module in the lengthwise direction of the battery module. However, the length of the busbar body portion may also correspond to six times (2pXs), nine times (3pXs) or twelve times (4pXs) the extension of a battery cell of the battery module in the lengthwise direction of the battery module. The latter is useful for double-layered busbar setups as described in detail below.

The busbar according to the invention further comprises at least four legs, i.e. at least four cell contact legs, which extend from the busbar body portion in a direction that is non-parallel to the extension direction of the busbar body portion, i.e., non-parallel to a lengthwise direction of the battery module. Preferably, each leg encloses an angle between 0° and 180°, further preferred between 45° and 135° with the extension direction of the bus bar body portion. Particularly preferred, each leg extends from the busbar body portion in a direction (essentially) perpendicular to the extension direction of the busbar body portion, i.e. (essentially) perpendicular to the lengthwise direction of the battery module. Further preferred, the at least four legs are essentially parallel to each other. Further, each leg is configured to electrically connect the busbar body portion and at least one cell terminal of a battery cell of the battery module. In other words, the busbar comprises an amount of legs that is equal to or less the amount of battery cells interconnected by the busbar, wherein each leg connects at least one cell terminal to the busbar body portion.

The busbar of the present invention thus allows for a busbar design, wherein the busbar body portion, i.e., the portion of the busbar that is mainly responsive for carrying an electric current, can be at least partially disposed next to the cell terminal. This is achieved by extending the cell contact legs from a busbar body portion in a direction non-parallel to a busbar extension direction. As the cell terminals protrude upward from the battery cell case, there is a space next to the battery cell terminals that is normally unused by mounting the busbars on top of the battery cell terminals. The busbar body portion of the busbar of the invention can be disposed within this space next to the battery cell terminals, e.g. by contacting the cell terminals from the side via respective legs or by using bent legs for contacting the cell terminals from above, while positioning the busbar body portion next thereto. Thus, the busbar of the invention allows for a battery module with decreased height.

Further, as the cell contacting legs extend from the busbar body portion in a direction non-parallel to the extension direction thereof, they provide improved plasticity (deformability) to the busbar of the invention. Exemplarily, the cell contacting legs can pivot to a certain extent around a connection portion to the busbar body portion. Therein, any deformation of the busbar, particularly of the cell legs relatively to the busbar body portion may be either elastically or plastically. Hence, the flexibility of the busbar is increased compared to conventional bar-shaped busbars. Thus, the busbar of the invention allows for compensation of dimensional changes of the battery module, e.g., due to cell swelling, as well as for compensating relative movement between the battery cells of the battery module. Hence, by damping mechanical loads due to the bending of the cell contact legs around their connection portion to the bus bar body portion, the probability of cracks of the busbar or the like is decreased and thus stability of the battery module is increased. Particularly, the busbar of the invention can be deformed in response to any displacement of the cell terminals it is connected to without reaching maximum strain, i.e., breaking point. Further, the busbar advantageously reduces the maximum load acting on the cell terminal.

In the busbar of the invention, the busbar body portion comprises a first body section, i.e. a first peripheral body section, and a second body section, i.e., a second peripheral body section, wherein the first body section and the second body section are spaced apart from each other in the extension direction of the busbar body portion, i.e. in the lengthwise direction of the battery module. Therein, the first and second body sections are spaced apart from each other by a third body section, i.e., a third central body section, of the busbar body portion. In other words, the third body section is disposed in between the first body section and the second body section. Hence, the busbar of the invention is essentially divided into three parts, wherein the peripheral body sections serve the connection to the battery cell terminals and the central body section serves current transport.

At least two cell contact leg of the at least four cell contact legs extends from the first peripheral body section and at least two other cell contact leg of the at least four cell contact legs extends from the second peripheral body section. In other words, at least two cell contact leg extends from each of the first and second body section, respectively. Preferably, a first plurality of cell contact legs extends from the first body section and a second plurality of cell contact legs extends from the second body section, wherein the first plurality of legs equals the second plurality of legs. Further preferred, the first body section and the second body section are of essentially the same length in the extension direction of the busbar body portion, i.e., the lengthwise direction of the battery module and preferably the first, second and third body sections are of essentially the same length in the extension direction of the busbar body portion, i.e., the lengthwise direction of the battery module.

According to the present invention, the length of the first body section corresponds to the spatial extension of the respective cell terminals connected to the first body section via respective cell contact legs. Therein, said length and said spatial extension refer to the extension direction of the busbar body portion, i.e., the lengthwise direction of the battery module. Exemplarily, if two cell terminals are connected via two cell contact legs to the first body section, the length of the first body section corresponds to the spatial extension of two battery cell terminals, preferably of two battery cell(s) (cases). Then, also two cell terminals are connected via two cell contact legs to the second body section, wherein the length of the latter corresponds to the spatial extension of two battery cell terminals, preferably to the spatial extension of two battery cell(s) (cases). Further then also the length of the third section corresponds to the spatial extension of two battery cell terminals, particularly preferred of two battery cell(s) (cases), in the lengthwise direction of the battery module. Setting the length of the third body section equal to the length of the first and second body section advantageously allows for a double layer busbar configuration as explained below.

According to the invention at least two cell contact legs extend from the first peripheral body section and at least two cell contact legs extend from the second peripheral body section. Hence, at least two cell terminals are connected to each of these body sections. Within each body section, the cell contact legs are separated (spaced apart) from each other in the extension direction of the busbar body portion, i.e., the lengthwise direction of the battery module, respectively. Particularly, the at least two cell contact legs extending from the first peripheral body section are spaced apart from each other and the at least two cell contact legs extending from the second peripheral body section are spaced apart from each other. Naturally, also the cell contact legs of the first and second body portion are spaced apart. By separating the cell contact legs, i.e., by contacting each cell terminal with a single cell contact leg, the plasticity of the busbar is further increased, providing the advantages defined above.

According to the invention, the at least two cell contact legs that extend from the first peripheral body section are separated from each other by at least one first cutout. Further, the at least two cell contact legs that extend from the second peripheral body section are preferably separated by at least one second cutout. In other words, within a body section a cutout is disposed between each two adjacent cell contact legs. The material in the region of such cutout was preferably removed after casting a monolithic busbar blank. The cutouts, e.g., the first and second cutouts, extend into the respective peripheral body section. Therein, each cutout is oriented in parallel to the cell contact legs in between the cell contact legs and changes direction within the respective peripheral body section, such that an end of such cutout not disposed between cell contact legs extends in an extension direction of the busbar body portion. With such cutouts, the plasticity of the busbar is advantageously further increased. By extending the cutouts in the peripheral body sections, with an amended extension direction of the cutout within these body sections, mechanical properties of the busbar may advantageously be selectively adapted. Further preferred, additional cutouts may be arranged within the cell contact legs, e.g. one or more cutouts within each of the legs and/or within the third central body section.

Particularly preferred, the height of the busbar according to the present invention, particularly preferred the height of the busbar body portion thereof, is substantially smaller than the width and the length of the busbar. Therein the length of the busbar may refer to (correspond/be measured in) an extension direction of the busbar and the width may refer to (correspond/be measured in) a direction perpendicular to the extension direction. The height may then refer to (correspond/be measured in) a direction perpendicular to the length direction and the width direction of the busbar. Preferably, the height of the busbar, particularly preferred the height of the busbar body portion, is smaller than the height of the cell terminals to which the busbar, e.g. the peripheral busbar body sections, is connected via respective cell contact legs. Therein, in the context of this application, the height of the terminals refers to the extension of the cell terminals above a cap plate of a battery cell case, e.g. along the busbar's height direction. This embodiment allows for a particularly compact battery module.

Another aspect of the present invention relates to a battery module, wherein such battery module comprises a plurality of battery cells that are aligned in a lengthwise direction of the battery module. Therein, each battery cell comprises a battery case, particularly for receiving an electrode assembly and a cap assembly that is placed on the battery case for closing the battery case. From the cap assembly usually the cell terminals protrude. Further, the cap assembly may comprise a vent opening. The battery module of the present invention further comprises a plurality of busbars according to the present invention, wherein these busbars are configured for electrically interconnecting the battery cells of the battery module in the respective configuration (XsYp or XpYs) of the battery module. Therein, each of the busbars is electrically connected to the cell terminals of at least four battery cells, i.e. comprises at least two cell contact legs extending from a first body section and at least two cell contact legs extending from a second body section, the cell contact legs electrically connecting the terminals and a busbar body portion that is for electrically interconnecting the battery cells.

According to a preferred embodiment of the battery module of the invention, at least one of the body sections of the busbar as described above extends in the lengthwise direction of the battery module with a spatial extension that corresponds to the spatial extension of at least one battery cell in the lengthwise direction of the battery module. In other words, at least one of the body sections has a length in the lengthwise direction of the battery module that is at least the length of one battery cell, i.e. one battery cell casing, in the lengthwise direction of the battery module. Particularly preferred, each of the body sections of the busbar has a spatial extension in the lengthwise direction of the battery module that corresponds to the spatial extension of at least one battery cell in the lengthwise direction of the battery module. Therein, as described in detail below, an extension of each body section that corresponds to the extension of one battery cell allows for a 1pYs configuration. Particularly preferred, an extension of each body section of the busbar corresponds to the extension of X battery cells, wherein such busbar advantageously allows for an XpYs configuration of the battery module.

In a particularly preferred embodiment, the battery module comprises a first set of busbars and a second set of busbars according to the invention. Therein, a busbar of the first set of busbars, particularly preferred each busbar of the first set of busbars, is shifted with respect to a corresponding busbar of the second set of busbars in the lengthwise direction of the battery module. Therein, for each busbar of the first set of busbars a busbar of the second set of busbars exists that is shifted in the lengthwise direction of the battery system by the length of one body section of the busbars according to the invention, this length referring to an extension of the busbar section in the extension direction thereof, i.e. along the lengthwise direction of the battery module. As the body sections of the busbar are preferably each of the same length in said direction, the busbars of the first and second set of busbars are shifted along said direction by the length of any of these sections. In other words, the first or second peripheral body section of a busbar of the first set of busbars is preferably overlaid with a third central body section of a busbar of the second set of busbars. In other words, the busbars of the first set of busbars partially overlap the busbars of the second set of busbars.

According to this preferred embodiment of the battery module, the first set of busbars electrically interconnects a first subset of the plurality of battery cells and the second set of busbars electrically interconnects a second subset of the plurality of battery cells. In other words, in an XpYs configuration, the first set of busbars preferably interconnects Xp(0.5*Y)s battery cells and the second set of busbars preferably interconnects Xp(0.5*Y)s battery cells. Further preferred, in a XsYp configuration, the first set of busbars preferably interconnects (0.5*X)sYp battery cells and the second set of busbars preferably interconnects (0.5*X)sYp battery cells. Hence, this embodiment advantageously allows for a denser packaging of the battery module, using partially overlaid busbars as described above. In order to provide correct electrical function of the battery module, the first set of busbars is preferably separated from the second set of busbars via at least one electrically insulating layer. In other words, each busbar of the first set of busbars is electrically isolated from each of the busbars of the second set of busbars, by distance and/or by an insulating layer in between these busbars, particularly in between the partially overlaid busbars as described above.

Particularly preferred, the first set of busbars is separated from the second set of busbars in a height direction of the battery module. In other words, the battery module preferably comprises a first set of busbars interconnecting a first subset of the plurality of battery cells, wherein this first subset of busbars is followed in the height direction of the battery module by at least one insulating layer, i.e. at least one insulating layer disposed above the first set of busbars. The at least one insulating layer is followed in the height direction of the battery module by the second set of busbars interconnecting the second subset of the plurality of battery cells, i.e. the second subset of busbars is disposed above the at least one insulating layer. Further insulating layers may be disposed below the first set of busbars, e.g. for isolating them from the battery call cases, and/or above the second set of busbars, e.g. for isolating them from an top cover of the battery module. According to another preferred embodiment, at least one of these electrically insulating layers is replaced or comprises a flexible printed circuit, FPC, layer embedded by outer insulating layers. In other words, a FPC with electrically passive main surfaces may be used as insulating layer. Therein, the main surfaces of the FPC may not be completely passive but may allow for electrically connecting the FPC to the busbars and/or the cell terminals of battery cells of the module. Exemplarily, the FPC may be part of a Cell Supervision Circuit, CSC, connected to at least one busbar or cell terminal of the battery module for receiving at least one cell voltage and/or temperature of at least one battery cell of the battery module. The FPC may therein be disposed between the subset of busbars, below the first subset of busbars or above the second subset of busbars.

According to a further preferred embodiment, the battery cells of the first subset and the battery cells of the second subset are interleaved with each other. Therein, as the busbars of the first set of busbars are shifted from the busbars of the second set of busbars as described above, a busbar of the first set spans over at least one battery cell of the second subset without contacting it and a busbar of the second set spans over at least one battery cell of the first subset without contacting it. Particularly, the central body section of a busbar of the first set may be located over the cell terminals of at least one battery cell of the second subset without contact and the central body section of a busbar of the second set may be located over the cell terminals of at least one battery cell of the first subset without contact. Herein contact particularly refers to electric contact but may also refer to mechanical contact.

Further preferred, if the extensions of the busbar's body sections correspond to the extension of a single battery cell, one battery cell of the first and second subset may follow each other in alternating fashion. If the extensions of the body sections of the busbars correspond to the extension of two battery cells, pairs of battery cells of the first and second subset may follow each other in alternating fashion. If the extensions of the busbar's body sections correspond to the extension of a plurality of battery cells, corresponding pluralities of battery cells of the first and second subset may follow each other in alternating fashion. Therein the length of at least one, particularly preferred of each, of the body sections of the busbars preferably corresponds to the spatial extension of battery cells connected in parallel within the battery module in the lengthwise direction of the battery module. However, the at least one battery cell of the battery module may be connected to a busbar of the first set of busbars and to a busbar of the second set of busbars, e.g. for providing an electrical connection between the first and second set of busbars. Hence, an electrical connection between a first module terminal and a second module terminal can be closed via the first set of busbars, the second set of busbars, and the battery cells of the battery module. A battery module may comprise further busbar elements, e.g., third busbar elements, which are configured for providing an electrical connection between the first set of busbars and the second subset cells and/or for providing an electrical connection between battery module terminals and the battery cells. Further, other distributions of the battery cells of the first and second subset of battery cells, e.g. wherein the interleaved pluralities comprise different amounts of cells, are preferred.

According to another particularly preferred embodiment of the battery module of the invention, a busbar of the first set of busbars comprises a busbar body portion that is configured to be placed next to a cell terminal and has at most the height of a cell terminal. The busbar of the first set of busbars preferably further comprises at least one leg with a cell terminal contact portion that is spaced apart from the busbar body portion in a height direction thereof, i.e. in a height direction of the battery module. Preferably all of the cell contact legs of the busbar of the first set of busbars comprise such cell terminal contact portion. Further preferred, the busbar of the first set of busbars comprises a bridging portion that is configured for connecting the busbar body portion and the (respective) cell terminal contact portion. Particularly preferred, an individual bridging portion is provided for each cell terminal contact portion. This embodiment advantageously allows for contacting the cell terminals from above while positioning the busbars of the first set next to the cell terminals.

Further preferred, in this embodiment a busbar of the second set of busbars is at most the height of a cell terminal. Particularly preferred, the planar shape of a busbar of the second set of busbars corresponds to the height of the cell terminals and the height of a busbar of the first set of busbars. Hence, if the busbar of the second set of busbars are disposed on the busbars of the first set of busbars and next to the cell terminals, the cell contact legs of the busbar of the second set can extend over the cell terminals without being bent. However, other shapes of the busbars of the second set of busbars could be considered. Further preferred the height of a busbar of the first set of busbars and of a busbar of the second set of busbars is equal to half of the height of the cell terminals, respectively. Then, the height of a busbar of the second set of busbars stacked upon a busbar of the first set of busbars is advantageously aligned with the height of the cell terminals of the battery module. According to this embodiment, the busbars of the second set of busbars also require cell contact legs with a cell terminal contact portion spaced apart from the bus bar body portion in a height direct therefor for contacting the cell terminals and further require a bridging portion for connecting the respective cell terminal contact portions and the busbar body portion as described above. Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery module according to the prior art;
- Fig. 2: illustrates a schematic top view of a busbar according to an embodiment;
- Fig. 3: illustrates a schematic perspective view of a battery module according to an embodiment;
- Fig. 4: illustrates a schematic exploded perspective view of a battery module according to an embodiment;
- Fig. 5: illustrates a schematic exploded perspective view of the busbar layers of a battery module according to an alternative embodiment;
- Fig. 6: illustrates a schematic perspective view of a Flexible Printed Circuit according to an embodiment; and
- Fig. 7: illustrates schematic top views of connection schemes of battery modules according to embodiments.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

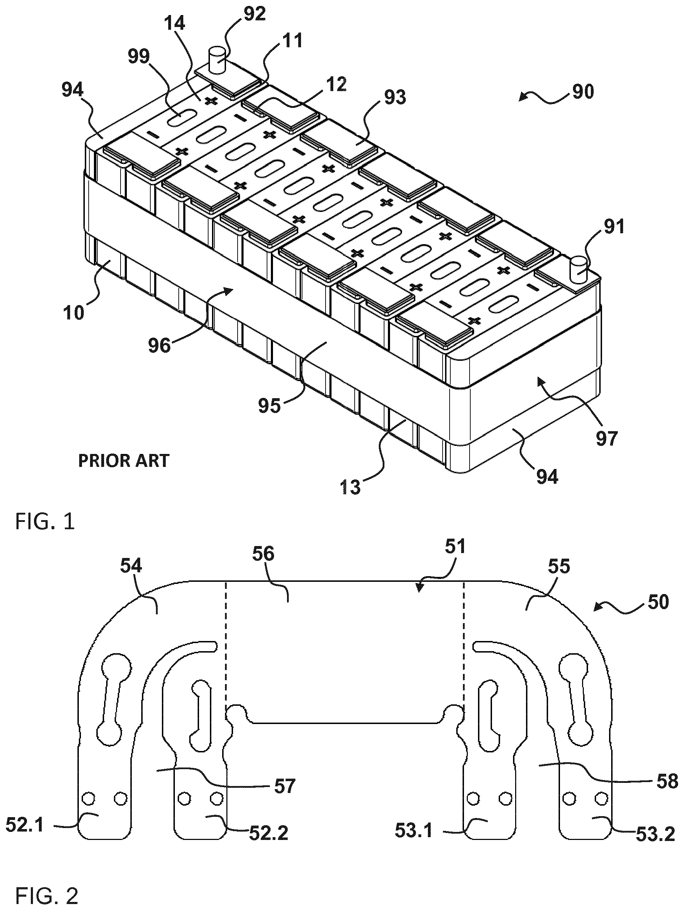

Figure 1 illustrates a battery module 90 according to the prior art comprising twelve prismatic battery cells 10 that are connected in series between a negative first module terminal 91 and a positive second module terminal 92. In other words, the battery module 90 has a 12s1p configuration. Each battery cell 10 has a battery case 13 with a cap assembly 14 placed on the battery case 13, wherein a vent opening 99 is disposed in the cap assembly 14. Within the battery module 90 the battery cells 10 are stacked in a lengthwise direction with their wide side surfaces such that first lateral walls of adjacent battery cells 10 face each other. As a result, the battery module 90 comprises a rectangular shape with a wide module side surface 96 extending in the lengthwise direction and a narrow module side surface 97 extending perpendicular thereto. One positive and one negative electrode terminal 11 and 12 of each pair of neighboring battery cells 10 are electrically connected through a bus bar 93. Spacers 94 are positioned adjacent to the outward facing wide side surface of the outermost battery cells 10 and hence terminate the battery module 90 in the lengthwise direction. A ribbon 95 runs around the battery module 90 and compresses it in the lengthwise direction.

Figure 2 illustrates a schematic top view of a busbar 50 according to the present invention. Therein, the planar busbar 50 comprises a busbar body portion 51 consisting of a first peripheral body section 54 and a second peripheral body section 55 that are separated by a central body section 56 interposed between the first and second body sections 54, 55. The central body section 56 is of rectangular shape, whereas upper corners of the peripheral body sections 54, 55 are rounded and wherein these sections are further processed as described below. The busbar body portion 51 extends within an extension direction thereof, which is the horizontal direction of Figure 2, i.e. has its largest extension in this direction.

A pair of two cell contact legs 52.1, 52.2 extends from the first peripheral body section 54 and a pair of two cell contact legs 53.1, 53.2 extends from the second peripheral body section 55. Each of these legs 52, 53 extends in a direction that is perpendicular to the extension direction of the busbar body section 51, particularly in downward vertical direction of Figure 2. Each of these cell contact legs 52, 53 is configured to be connected to a cell terminal 11, 12 as illustrated exemplarily in Figure 1. Thus, the busbar body section 51 can advantageously be positioned next to the cell terminals 11, 12 in a space-saving manner.

The cell contact legs 52.1, 52.2 extending from the first body section 54 are separated from each other by a first cutout 57. That is, the cutout 57 forms a void space between the legs 52.1, 52.2 and extends there in a direction perpendicular to the extension direction of the bus bar body 51. Above that, the cutout 57 extends into the first peripheral body section 54 of the busbar body portion 51. In extending there, the cutout 57 changes its direction such that a terminal portion of cutout 57 within first body section 54 extends parallel to the extension direction of the busbar body portion 51. In other words, by extending the cutout 57 into the first body section 54, the cell contact legs 52 are prolonged almost to the central body section 56 (naturally with a change of direction). The cell contact legs 53.1, 53.2 extending from the second body section 55 are separated from each other by second cutout 58. Cutout 58 forms a void space between legs 53.1, 53.2 and further extends there in a direction perpendicular to the extension direction of the bus bar body 51. Cutout 58 further extends into the second peripheral body section 55 of the busbar body portion 51 and changes its direction in doing so. A terminal portion of cutout 58 within second body section 55 extends antiparallel to the extension direction of the busbar body portion 51. In other words, by extending cutout 58 into the second body section 55, the cell contact legs 53 are prolonged almost to the central body section 56 (naturally with a change of direction). Cutouts 57, 58 increase the plasticity of busbar 50, particularly of the cell contact legs 52, 53 and particularly within the extension direction of the busbar body section 51. The plasticity of busbar 50 is further increased by providing bores at conjunctions of the second and third cell contact leg 52.2, 53.1 and the central body section 56 of the busbar body portion 51, respectively. Further cutouts in the cell contact legs 52.1, 52.2 also improve the plasticity of the busbar 50.

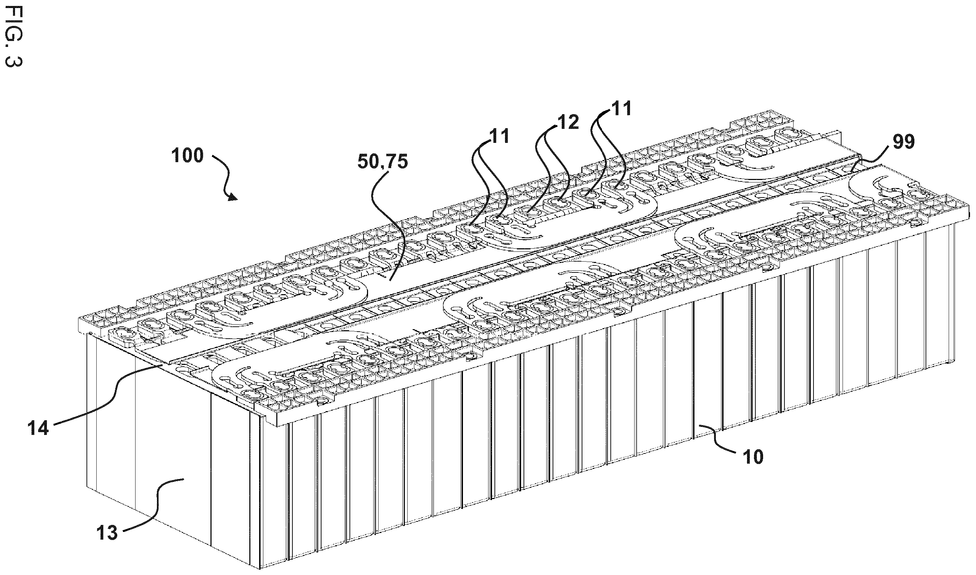

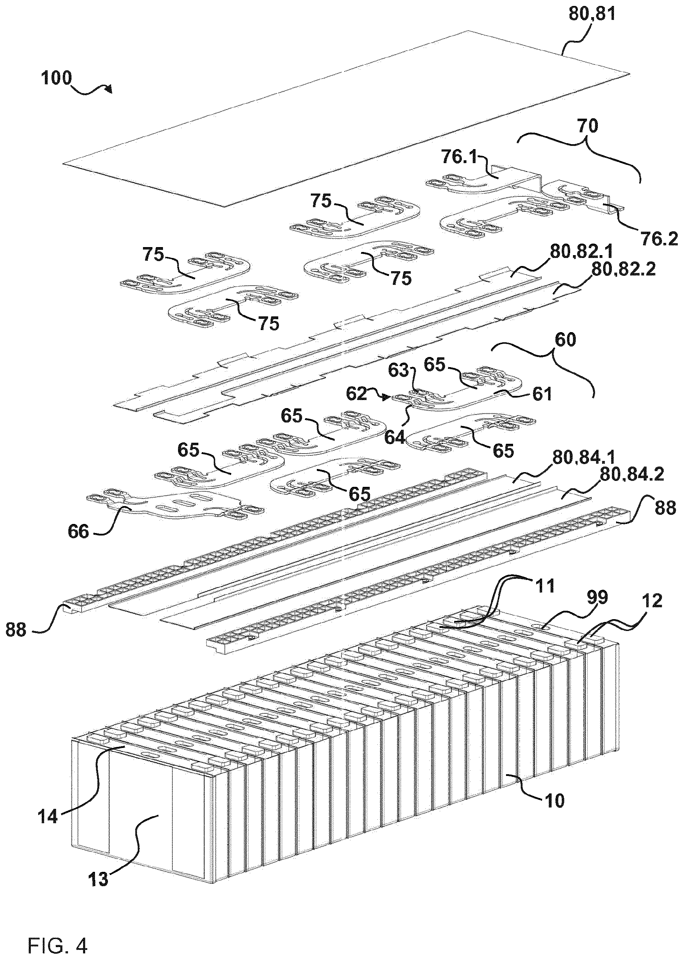

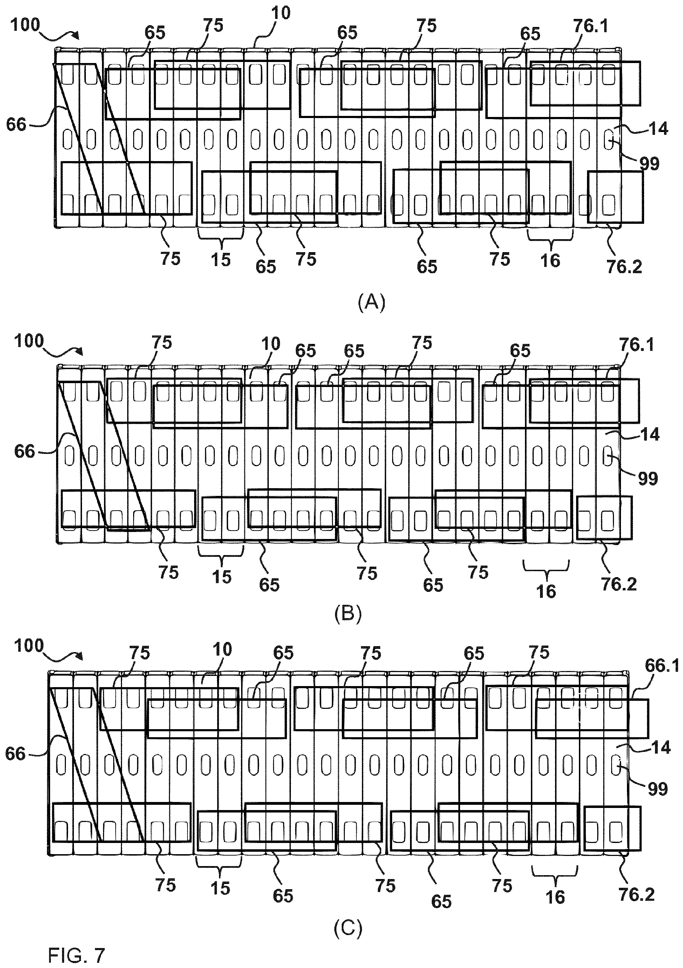

Figures 3 and 4 illustrate a battery module 100 according to an embodiment, wherein Fig. 3 illustrates a schematic perspective view thereof and Figure 4 illustrates an exploded view thereof. The battery module 100 comprises a plurality of battery cells 10 that are stacked in a lengthwise direction of the battery module 100. Each of the battery cells 10 comprises a battery case 13 for receiving an electrode assembly that is covered by a cap assembly 14. A vent opening 99 that allows for discharging vent gases in an abnormal operation condition of the battery cell 10 is disposed in the cap assembly 14. Each cell 10 further comprises a positive cell terminal 11 and a negative cell terminal 12. A plurality of busbars 50 as illustrated in Figure 2 are utilized to interconnect the terminals 11, 12 of the battery cells 10 in order to form a 2p14s configuration of the battery module 100. The detailed routing of the current path among the battery cells 10 is illustrated in more detail in Figure 7 (B).

As shown in Figure 4, the edges of the plurality of aligned battery cells 10 are covered by edge protectors 88. Further, an insulating layer 84.1 is disposed between a first terminal 11, 12 and the vent opening 99 of each battery cell 10 and another insulating layer 84.2 is disposed between a second terminal 11, 12 and the vent opening 99 of each battery cell 10. These insulating layers 84.1, 84.2 realize an electric insulation between the cap assemblies 14 of the battery cells 10 and the busbars 65 of a first set of busbars 60 disposed above the insulating layers 84.1, 84.2. Each of the busbars 65 of the first set of busbars 60 is essentially of a combshape as illustrated in Figure 4 and comprises three body sections 54, 55, 56 forming the bus bar body section 51. Each of the body sections 54, 55, 56 has a spatial extension in the lengthwise direction of the battery module 100 that corresponds to the spatial extensions of the battery cases 13 of two battery cells 10 in the lengthwise direction of the battery module 100. Further, two cell contact legs 52, 53 extend from the peripheral body sections 54, 55 of each of busbars 65. Hence, each busbar 65 is configured to electrically connect the terminals 11, 12 of two pairs of battery cells 10, wherein one pair of battery cells 10 is disposed between the connected pairs of battery cells 10. Therein, the busbars 65 and the third busbar 66 of the first set of busbars 60 electrically connect the cells 10 of a first subset 15 of battery cells 10 of module 100.

Above the busbars 65 of the first set of busbars 60 two further insulating layers 82.1 and 82.2 are disposed in order to electrically insulate the busbars 65 of the first set of busbars 60 from busbars 75 of a second set of busbars 70 disposed above the first set of busbars 60. Therein, the insulating layers 82.1, 82.2, as well as the insulating layers 84.1, 84.2, are disposed solely in the area of the bus bar body sections 51 of busbars 65, 75, while the cell contact legs 52,53 of busbars 65, 75 are kept free from the insulating layers 82, 84. Hence, a electrical connection can be realized between the cell terminals 11, 12 and the busbars 65, 75 of the first and second set of busbars 60, 70, respectively, while electrically insulating the busbars 65, 75 from the first and second set of busbars 60, 70 from each other. The second set of busbars 70 further comprises a third busbar 76.2 electrically connecting two outermost battery cells 10 to a negative module terminal and a third busbar 76.1 electrically connecting two adjacent battery cells 10 to a positive module terminal. In order to electrically insulate the second set of busbars 70 from an exterior, an insulating top cover 81 covering the whole projected top surfaces of battery cells 10 is disposed on busbars 75, 76.

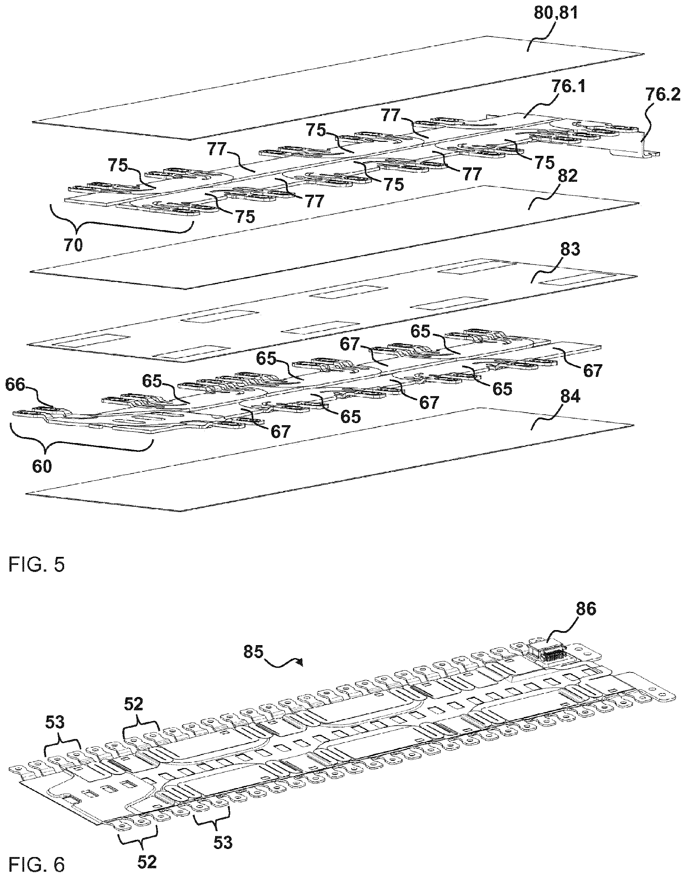

In the battery module as shown in Figures 4 and 5 a channel is formed between the insulating layers 84.1 and 84.2, between the busbars 65 of the first set of busbars 60, between the insulating layers 82.1 and 82.2, and between the busbars 75 of the second set of busbars 70. This channel is overlaid with the vent openings 99 of the plurality of aligned battery cells 10 and is further accessible through openings in the third busbar 66 of the first set of busbars 60. Further, top cover 81 confines the channel from above, such that it is fully enclosed by the cap assembly 14, lateral walls of busbars 65, 75 and insulating layers 82, 84 and the top cover 81. Hence, venting gases emitted through the vent openings 99 of the battery cells 10 in an abnormal operation condition of the battery cells 10, e.g., during thermal runaway, can be disposed via this channel along the lengthwise direction of the battery module 100 and outcast from a side of the battery module 100.

The battery module 100 according to the embodiment as illustrated in Figure 5 differs from the battery module 100 of Figures 3 and 4 solely by the structure of the busbars 50 and insulating layers 80 disposed on top of the battery cells 10 of the battery module 100. As can be seen in the exploded view of Figure 5, an insulating layer 84 configured to fully cover the top surfaces of the cap assemblies 14 of the battery cells 10 as shown in Figure 4 forms the lowermost layer of the busbar configuration of such battery module 100. A first set of busbars 60 is disposed on top of this insulating layer 84. Therein, the first set of busbars 60 comprises busbars 65 and a third busbar 66 as described above and further comprises inlays 67 injection molded to the busbars 65, 66 in order to fill gaps between them and in order to consolidate the first set of busbars 60 as a mechanically stable layer. Above this layer of the first set of busbars 60 two further insulating layers 82, 83 are disposed that have the same extension as the insulating layer 84. Above these insulating layers 82 ,83 a second set of busbars 70 is disposed that is electrically insulated from the first set of busbars 60 via these insulating layers 82 ,83. Within this second set of busbars 70, busbars 75 and third busbars 76.1, 76.2 as described above are disposed. Again, inlays 77 are injection molded into gaps between these busbars 75, 76 in order to fill these gaps and to consolidate the second set of busbars 70 as a mechanically stable layer. An insulating top cover 81 as described with respect to Figure 4 is disposed on top of the second set of busbars 70. Hence, in the battery module 100 of Figure 5, no channel for disposing vent gases is formed by the insulating layers 80 and the busbars 50. However, instead a battery module 100 is provided that has an improved mechanical stability, particularly in an upper (cover) region thereof.

As further illustrated in Figure 6, the insulating layers 81, 82, 83, 84 and the first and second set of busbars 60, 70 may form a flexible printed circuit, FPC, 85 when overlaid on each other. Therein, the outer insulating layers 81, 84 may be configured for encapsulating the remaining layers 60, 70, 82, 83 by forming an outer insulating shell around the remaining layers 60, 70, 82, 83. Therein, the cell contact legs 52, 53 of the busbars 50 protrude laterally from the FPC 85 for contacting the cell terminals 11, 12 of the cells 10 of a battery module 100. Further, the inner insulating layers 82, 83 may comprise further metallizations or circuit components, e.g. of a Cell Supervision Circuit, CSC. Such circuit components may be configured for detecting and/or processing cell temperatures and/or voltages and may therefore comprise surface metallizations configured to electrically connect to the busbars 50. These metallizations may further be configured to connect to an integrated circuit, IC, 86 that may be configured for receiving signals corresponding to cell voltages and/or temperatures, for processing these signals, and/or for communicating with other components as connector. The main electric components 85 of the FPC may be provided above the second subset 70 of busbars 75, 77, below the first subset 60 of busbars 65, 67 or in between the subset 60 and subset 70 of busbars.

Figure 7 (B) illustrates the current path through the busbars 65, 66, 75, 76 of the battery module 100 according to Figures 3 to 5 in more detail and Figures 7 (A) and (C) illustrates alternative embodiments of current paths of such a battery module 100 in more detail.

A simple setup of a current path using busbars 65, 66 of a first set of busbars 60 and busbars 75, 76 of a second set of busbars 70 is shown in Figure 7 (A). Therein, a third busbar 76.1 of the upper second set of busbars 70 connects a first module terminal with the upper cell terminals of a second pair of battery cells 10 (counted from the right side of the battery module 100). The lower cell terminals of this pair of battery cells 10 is connected via a busbar 75 to the lower cell terminals of the next but one pair of battery cells 10 (towards the left). In other words, the busbar 75 does not connect to the cell terminals of an adjacent pair of battery cells 10. However, the upper terminals of the next but one pair of battery cells 10 connected via a busbar 75 are again connected via another busbar 75 to a next but one pair of battery cells 10 (to the left) and the lower cell terminals of this pair of battery cells 10 is again connected via another busbar 75 to a next but one pair of battery cells 10 (to the left). After two more busbars 75, the lower terminals of an outermost pair of battery cells 10 on a left side of the battery module 100 are reached. Therein, the busbars 75 connect a second subset 16 of battery cells 10, which is formed by pairs of battery cells 10 starting from the second pair of battery cells 10 counted from a right side of the battery module 100 to the outermost pair of battery cells 10 at a left side of the battery module 100 and being interleaved with pairs of battery cells 10 of a first subset 15 of battery cells 10 as described below. The upper terminals of this leftmost (outermost) pair of battery cells 10 are connected via a third busbar 66 to the lower cell terminals of an adjacent pair of battery cells 10. Therein, the third busbar 66 may provide a transition between the upper second set of busbars 70 to the lower first set of busbars 60. Hence, third busbar 66 of Figure 7 (A) is preferably of a bent configuration and extends through any insulating layer disposed between the first and second set of busbars 60, 70. The upper cell terminals of the adjacent pair of battery cells 10 are then connected via a busbar 65 of the first set of busbars 60 to the upper cell terminals of a next but one pair of battery cells 10 and so forth until a busbar 65 of the first set of busbars 60 provides a connection to the upper terminals of an outermost pair of battery cells 10 on the right end of the battery module 100. Thus, busbars 65 connect a first subset 15 of battery cells 10, which is formed by pairs of battery cells 10 starting from the outermost pair of battery cells 10 counted from a right side of the battery module 100 to a second pair of battery cells 10 counted from the left side of the battery module 100, and wherein the pairs of cells 10 of the first subset 15 of cells 10 are interleaved with the pairs of cells 10 of the second subset 16 of cells 10 as described above. The lower terminals of the rightmost (outermost) pair of battery cells 10 are then connected to a second module terminal via a third busbar 76.2 of the second set of busbars 70.

An alternative configuration of the current path through the battery module 100 provided by busbars 65, 66, 75, 76 is illustrated in Figure 7 (B). Therein, a current path again starts with a third busbar 76.1 of an upper second set of busbars 70, the third busbar 76,1 connecting a first module terminal with the upper cell terminals of a second pair of battery cells 10 (counted from the left side of the battery module 100). Then, the current path proceeds via three further busbars 75 of the second set 16 of busbars as described with respect to Figure 7 (A). However, while the lower cell terminals of a fifth pair of battery cells 10 counted from the left side of the battery module 100 are connected to a busbar 75, the upper terminals of this pair of battery cells is connected to a busbar 65. Hence, a transition between upper second set of busbars 70 to lower first set of busbars 60 is provided. However, after said busbar 65 connects said cell terminals of said fifth pair of battery cells 10 to the upper terminals of a third pair of battery cells 10 counted from the left side of the battery module 100, the lower terminals of said third pair of battery cells 10 are again connected via a busbar 75 to the lower terminals of the outermost left pair of battery cells 10. The upper terminals of this outermost left pair of cells 10 are then connected via third busbar 66 to the lower cell terminals of an adjacent pair of battery cells 10. The upper terminals of said adjacent pair of cells 10 is then again connected via an upper busbar 75 to the terminals of a next but one pair of battery cells 10. Hence, solely busbars 75 of the upper second set of busbars 70 surround third busbar 66 of the lower first set of busbars 60 and hence electric insulation between these busbars 66, 75 is ensured despite overlap between these busbars.

A further alternative configuration of the current path through the battery module 100 provided by busbars 65, 66, 75, 76 is illustrated in Figure 7 (C). Therein, and in contrast to the embodiments of Figure 7 (A) and (B), a third busbar 66.1 of the lower first set of busbars 60 connects a first module terminal with the upper cell terminals of a second pair of battery cells 10 (counted from the left side of the battery module 100). The lower cell terminals of said second pair of battery cells 10 are then connected via a busbar 75 of the upper second set of busbars 70 to the lower cell terminals of a next but one pair of cell 10. The upper cell terminals of said next but one pair of cells 10 are then again connected via a busbar 65 of said lower first set of busbars 60 and so forth. In other words, each pair of battery cells 10 is connected to one other pair of battery cells 10 via a busbar 65 and to another pair of battery cells 10 via a busbar 75. In other words, a transition between the upper and lower layer of busbars 60, 70 is provided via each pair of battery cells 10. This again provides the advantage that solely busbars 75 of the upper second set of busbars 70 surround third busbar 66 of the lower first set of busbars 60 connecting the two outermost left pairs of battery cells 10 and hence electric insulation between these busbars 66, 75 is ensured despite overlap between these busbars 66, 75. However, in the embodiment of Figure 7 (C) the lower cell terminals of an outermost right pair of battery cells are connected via a third busbar 76.2 of the upper second set of busbars 70 to a battery module terminals and hence the battery module terminals are provided on different layers of busbars 60, 70.

### Reference signs

- 10: battery cells
- 11: positive cell terminal
- 12: negative cell terminal
- 13: battery case
- 14: cap assembly
- 15: first set of battery cells
- 16: second set of battery cells

- 50: busbar
- 51: busbar body portion
- 52: cell contact leg
- 53: cell contact leg
- 54: first peripheral body section
- 55: second peripheral body section
- 56: third central body section
- 57: first cutout
- 58: second cutout

- 60: first (lower) set of busbars
- 61: busbar body portion
- 62: cell contact leg
- 63: cell terminal contact portion
- 64: bridging portion
- 65: busbar
- 66: third busbar
- 67: inlay
- 70: second (upper) set of busbars
- 75: busbar
- 76: third busbar
- 77: inlay

- 80: insulating layers
- 81: insulating top cover
- 82: insulating layer
- 83: insulating layer
- 84: insulating layer
- 85: flexible printed circuit (FPC)
- 86: integrated circuit (IC)

- 90: battery module (prior art)
- 91: negative module terminal (prior art)
- 92: positive module terminal (prior art)
- 93: busbar (prior art)
- 94: spacer (prior art)
- 95: ribbon (prior art)
- 96: wide module side surface (prior art)
- 97: narrow module side surface (prior art)
- 99: vent opening (prior art)

- 100: battery module

## Claims

1. Busbar (50, 70) for a battery module (100) with a plurality of battery cells (10) aligned in a lengthwise direction of the battery module (100), the busbar (50) comprising:
a busbar body portion (51) extending in an extension direction thereof with a length configured for connecting cell terminals (11, 12) of at least two battery cells (10) of the battery module (100) and comprising a first body section (54) and a second body section (55) spaced apart from each other in the extension direction by a third body section (56) of the busbar body portion (51);
at least four legs (52, 53) extending from the busbar body portion (51) in a direction non-parallel to the extension direction of the busbar body portion (51) and being configured for electrically connecting the busbar body portion (51) and cell terminals (11, 12) of battery cells (10) of the battery module (100),
wherein at least two legs (52.1, 52.2) extend from the first body section (54), are separated from each other in the extension direction of the busbar body portion (51) by at least one first cutout (57) that is oriented in parallel to the legs between the legs (52.1, 52.2) and that extends in the extension direction in the first body section (54),
wherein at least two legs ( 53.1, 53.2) extend from the second body section (55), are separated from each other in the extension direction of the busbar body portion (51) by at least one second cutout (58) that is oriented in parallel to the legs between the legs (53.1, 53.2) and that extends in the extension direction in the second body section (55),
wherein the length of each body section (54, 55, 56) corresponds to the spatial extension of the respective at least two cell terminals (11, 12) connectable to each of the first body section (54) and the second body section (55) via the respective at least two legs (52, 53), and
wherein the busbar (50, 70) has a planar shape.

2. Busbar (50) of claim 1, wherein the body sections (54, 55, 56) are of essentially the same length in the extension direction of the busbar body portion (51).

3. Busbar (50) of claim 1 or 2, wherein the height of the busbar (50), preferably the bus bar body portion (51), is substantially smaller than the width and the length of the busbar (50), preferably of the bus bar body portion (51).

4. Battery module (100), comprising
a plurality of battery cells (10) aligned in a lengthwise direction of the battery module (100), each battery cell (10) comprising a battery case (13) and a cap assembly (14) placed on the battery case (13); and
a plurality of busbars (50) for electrically interconnecting the battery cells (10), each of the busbars (50) being electrically connected to the cell terminals (11, 12) of at least two battery cells (10),
wherein the plurality of busbars (50) comprises a first set of busbars (60) and a second set of busbars (70) according to any one of the claims 1 to 3,
wherein a busbar (65) of the first set of busbars (60) comprises a planar busbar body portion (61) with at most the height of a cell terminal (11, 12) and a leg (62) with a cell terminal contact portion (63) that is spaced apart from the busbar body portion (61) in a height direction thereof and with a bridging portion (64) that is connecting the busbar body portion (61) and the cell terminal contact portion (63) and wherein a busbar (65) of the first set of busbars (60) is shifted with respect to a busbar (75) of the second set of busbars (70) by the length of one body section (54, 55, 56) of the busbars (50, 60, 70) in the lengthwise direction of the battery module (100), and
wherein each busbar of the first set of busbars (60) comprises:
a busbar body portion (51) extending in an extension direction thereof with a length configured for connecting cell terminals (11, 12) of at least two battery cells (10) of the battery module (100) and comprising a first body section (54) and a second body section (55) spaced apart from each other in the extension direction by a third body section (56) of the busbar body portion (51);
at least four legs (52, 53) extending from the busbar body portion (51) in a direction non-parallel to the extension direction of the busbar body portion (51) and being configured for electrically connecting the busbar body portion (51) and cell terminals (11, 12) of battery cells (10) of the battery module (100),
wherein at least two legs (52.1, 52.2) extend from the first body section (54), are separated from each other in the extension direction of the busbar body portion (51) by at least one first cutout (57) that is oriented in parallel to the legs between the legs (52.1, 52.2) and that extends in the extension direction in the first body section (54),
wherein at least two legs ( 53.1, 53.2) extend from the second body section (55), are separated from each other in the extension direction of the busbar body portion (51) by at least one second cutout (58) that is oriented in parallel to the legs between the legs (53.1, 53.2) and that extends in the extension direction in the second body section (55), and
wherein the length of each body section (54, 55, 56) corresponds to the spatial extension of the respective at least two cell terminals (11, 12) connected to each of the first body section (54) and the second body section (55) via the respective at least two legs (52, 53);
and wherein a busbar (75) or the second set or busbars (70) nas at most the neight or a cell terminal (11, 12).

5. Battery module (100) according to claim 4, wherein the first set of busbars (60) interconnects a first subset (15) of the plurality of battery cells (10) and the second set of busbars (70) interconnects a second subset (16) of the plurality of battery cells (10).

6. Battery module (100) of claim 4 or 5, wherein the first set of busbars (60) is separated from the second set of busbars (70) via at least one electrically insulating layer (80) and/or wherein at least one electrically insulating layer (80) is disposed below the first set of busbars (6) and/or above the second set of busbars (70) in a height direction of the battery module perpendicular to a lengthwise direction and a width direction of the battery module (100).

7. Battery module (100) of claim 6, wherein the at least one electrically insulating layer (80) comprises a flexible printed circuit (85) enclosed by outer insulating layers.

## Patentansprüche

1. Sammelschiene (50, 70) für ein Batteriemodul (100) mit mehreren Batteriezellen (10), die in Längsrichtung des Batteriemoduls (100) ausgerichtet sind, wobei die Sammelschiene (50) Folgendes umfasst:
einen Sammelschienenkörperteil (51), der sich in einer Erstreckungsrichtung davon mit einer Länge erstreckt, die zum Verbinden von Zellanschlüssen (11, 12) von mindestens zwei Batteriezellen (10) des Batteriemoduls (100) konfiguriert ist, und einen ersten Körperabschnitt (54) und einen zweiten Körperabschnitt (55) umfasst, die in der Erstreckungsrichtung durch einen dritten Körperabschnitt (56) des Sammelschienenkörperteils (51) voneinander beabstandet sind;
mindestens vier Schenkel (52, 53), die sich vom Sammelschienenkörperteil (51) in einer Richtung erstrecken, die nicht parallel zur Erstreckungsrichtung des Sammelschienenkörperteils (51) verläuft, und dazu konfiguriert sind, den Sammelschienenkörperteil (51) und die Zellanschlüsse (11, 12) der Batteriezellen (10) des Batteriemoduls (100) elektrisch zu verbinden,
wobei sich mindestens zwei Schenkel (52.1, 52.2) vom ersten Körperabschnitt (54) erstrecken und in der Erstreckungsrichtung des Sammelschienenkörperteils (51) durch mindestens einen ersten Ausschnitt (57) voneinander getrennt sind, der parallel zu den Schenkeln zwischen den Schenkeln (52.1, 52.2) ausgerichtet ist und sich in der Erstreckungsrichtung im ersten Körperabschnitt (54) erstreckt,
wobei sich mindestens zwei Schenkel (53.1, 53.2) vom zweiten Körperabschnitt (55) erstrecken und in der Erstreckungsrichtung des Sammelschienenkörperteils (51) durch mindestens einen zweiten Ausschnitt (58) voneinander getrennt sind, der parallel zu den Schenkeln zwischen den Schenkeln (53.1, 53.2) ausgerichtet ist und sich in der Erstreckungsrichtung im zweiten Körperabschnitt (55) erstreckt,
wobei die Länge jedes Körperabschnitts (54, 55, 56) der räumlichen Erstreckung der jeweils mindestens zwei Zellenanschlüsse (11, 12) entspricht, die über die jeweils mindestens zwei Schenkel (52, 53) mit dem ersten Körperabschnitt (54) bzw. dem zweiten Körperabschnitt (55) verbindbar sind, und
wobei die Sammelschiene (50, 70) eine ebene Form aufweist.

2. Sammelschiene (50) nach Anspruch 1, wobei die Körperabschnitte (54, 55, 56) in der Erstreckungsrichtung des Sammelschienenkörperteils (51) im Wesentlichen gleich lang sind.

3. Sammelschiene (50) nach Anspruch 1 oder 2, wobei die Höhe der Sammelschiene (50), vorzugsweise des Sammelschienenkörperteils (51), wesentlich kleiner ist als die Breite und die Länge der Sammelschiene (50), vorzugsweise des Sammelschienenkörperteils (51).

4. Batteriemodul (100), umfassend:
mehrere Batteriezellen (10), die in Längsrichtung des Batteriemoduls (100) ausgerichtet sind, wobei jede Batteriezelle (10) ein Batteriegehäuse (13) und eine auf dem Batteriegehäuse (13) angeordnete Kappenbaugruppe (14) umfasst; und
mehrere Sammelschienen (50) zum elektrischen Verbinden der Batteriezellen (10), wobei jede der Sammelschienen (50) elektrisch mit den Zellanschlüssen (11, 12) von mindestens zwei Batteriezellen (10) verbunden ist,
wobei die mehreren Sammelschienen (50) einen ersten Satz von Sammelschienen (60) und einen zweiten Satz von Sammelschienen (70) nach einem der Ansprüche 1 bis 3 umfassen,
wobei eine Sammelschiene (65) des ersten Satzes von Sammelschienen (60) einen planaren Sammelschienenkörperteil (61) mit höchstens der Höhe eines Zellanschlusses (11, 12) und einen Schenkel (62) mit einem Zellanschlusskontaktteil (63), der in einer Höhenrichtung davon vom Sammelschienenkörperteil (61) beabstandet ist, und mit einem Brückenteil (64), der den Sammelschienenkörperteil (61) und den Zellanschlusskontaktteil (63) verbindet, umfasst, und wobei eine Sammelschiene (65) des ersten Satzes von Sammelschienen (60) in Längsrichtung des Batteriemoduls (100) um die Länge eines Körperabschnitts (54, 55, 56) der Sammelschienen (50, 60, 70) gegenüber einer Sammelschiene (75) des zweiten Satzes von Sammelschienen (70) versetzt ist, und
wobei jede Sammelschiene des ersten Satzes von Sammelschienen (60) Folgendes umfasst:
einen Sammelschienenkörperteil (51), der sich in einer Erstreckungsrichtung davon mit einer Länge erstreckt, die zum Verbinden von Zellanschlüssen (11, 12) von mindestens zwei Batteriezellen (10) des Batteriemoduls (100) konfiguriert ist, und einen ersten Körperabschnitt (54) und einen zweiten Körperabschnitt (55) umfasst, die in der Erstreckungsrichtung durch einen dritten Körperabschnitt (56) des Sammelschienenkörperteils (51) voneinander beabstandet sind;
mindestens vier Schenkel (52, 53), die sich vom Sammelschienenkörperteil (51) in einer Richtung erstrecken, die nicht parallel zur Erstreckungsrichtung des Sammelschienenkörperteils (51) verläuft, und dazu konfiguriert sind, den Sammelschienenkörperteil (51) und Zellanschlüsse (11, 12) von Batteriezellen (10) des Batteriemoduls (100) elektrisch zu verbinden,
wobei sich mindestens zwei Schenkel (52.1, 52.2) vom ersten Körperabschnitt (54) erstrecken und in der Erstreckungsrichtung des Sammelschienenkörperteils (51) durch mindestens einen ersten Ausschnitt (57) voneinander getrennt sind, der parallel zu den Schenkeln zwischen den Schenkeln (52.1, 52.2) ausgerichtet ist und sich in der Erstreckungsrichtung im ersten Körperabschnitt (54) erstreckt,
wobei sich mindestens zwei Schenkel (53.1, 53.2) vom zweiten Körperabschnitt (55) erstrecken und in der Erstreckungsrichtung des Sammelschienenkörperteils (51) durch mindestens einen zweiten Ausschnitt (58) voneinander getrennt sind, der parallel zu den Schenkeln zwischen den Schenkeln (53.1, 53.2) ausgerichtet ist und sich in der Erstreckungsrichtung im zweiten Körperabschnitt (55) erstreckt, und
wobei die Länge jedes Körperabschnitts (54, 55, 56) der räumlichen Erstreckung der jeweils mindestens zwei Zellenanschlüsse (11, 12) entspricht, die über die jeweils mindestens zwei Schenkel (52, 53) mit dem ersten Körperabschnitt (54) bzw. dem zweiten Körperabschnitt (55) verbindbar sind;
und wobei eine Sammelschiene (75) des zweiten Satzes von Sammelschienen (70) höchstens die Höhe eines Zellanschlusses (11, 12) aufweist.

5. Batteriemodul (100) nach Anspruch 4, wobei der erste Satz von Sammelschienen (60) einen ersten Teilsatz (15) der mehreren Batteriezellen (10) miteinander verbindet und der zweite Satz von Sammelschienen (70) einen zweiten Teilsatz (16) der mehreren Batteriezellen (10) miteinander verbindet.

6. Batteriemodul (100) nach Anspruch 4 oder 5, wobei der erste Satz von Sammelschienen (60) durch mindestens eine elektrisch isolierende Schicht (80) vom zweiten Satz von Sammelschienen (70) getrennt ist und/oder wobei mindestens eine elektrisch isolierende Schicht (80) in einer Höhenrichtung des Batteriemoduls senkrecht zu einer Längsrichtung und einer Breitenrichtung des Batteriemoduls (100) unterhalb des ersten Satzes von Sammelschienen (6) und/oder oberhalb der zweiten Gruppe von Sammelschienen (70) angeordnet ist.

7. Batteriemodul (100) nach Anspruch 6, wobei die mindestens eine elektrisch isolierende Schicht (80) eine flexible gedruckte Schaltung (85) umfasst, die von äußeren Isolierschichten umgeben ist.

## Revendications

1. Barre omnibus (50, 70) pour un module de batterie (100) avec une pluralité d'éléments de batterie (10) alignés dans une direction longitudinale du module de batterie (100), la barre omnibus (50) comportant :
une partie de corps de barre omnibus (51) s'étendant dans une direction d'extension de celle-ci d'une longueur configurée pour relier des bornes d'éléments (11, 12) d'au moins deux éléments de batterie (10) du module de batterie (100) et comportant une première section de corps (54) et une deuxième section de corps (55) espacées l'une de l'autre dans la direction d'extension par une troisième section de corps (56) de la partie de corps de barre omnibus (51) ;
au moins quatre pieds (52, 53) s'étendant à partir de la partie de corps de barre omnibus (51) dans une direction non parallèle à la direction d'extension de la partie de corps de barre omnibus (51) et étant configurés pour relier électriquement la partie de corps de barre omnibus (51) et les bornes d'élément (11, 12) d'éléments de batterie (10) du module de batterie (100),
dans laquelle au moins deux pieds (52.1, 52.2) s'étendent à partir de la première section de corps (54), sont séparés l'un de l'autre dans la direction d'extension de la partie de corps de barre omnibus (51) par au moins une première découpe (57) qui est orientée parallèlement aux pieds entre les pieds (52.1, 52.2) et qui s'étend dans la direction d'extension dans la première section de corps (54),
dans laquelle au moins deux pieds (53.1, 53.2) s'étendent à partir de la deuxième section de corps (55), sont séparés l'un de l'autre dans la direction d'extension de la partie de corps de barre omnibus (51) par au moins une seconde découpe (58) qui est orientée parallèlement aux pieds entre les pieds (53.1, 53.2) et qui s'étend dans la direction d'extension dans la deuxième section de corps (55),
dans laquelle la longueur de chaque section de corps (54, 55, 56) correspond à l'extension spatiale des au moins deux bornes d'élément (11, 12) respectives pouvant être reliées à chacune de la première section de corps (54) et de la deuxième section de corps (55) via les au moins deux pieds (52, 53) respectifs, et
dans laquelle la barre omnibus (50, 70) présente une forme plane.

2. Barre omnibus (50) selon la revendication 1, dans laquelle les sections de corps (54, 55, 56) sont sensiblement de même longueur dans la direction d'extension de la partie de corps de barre omnibus (51).

3. Barre omnibus (50) selon la revendication 1 ou 2, dans laquelle la hauteur de la barre omnibus (50), de préférence la partie de corps de barre omnibus (51), est sensiblement inférieure à la largeur et à la longueur de la barre omnibus (50), de préférence de la partie de corps de barre omnibus (51).

4. Module de batterie (100), comportant
une pluralité d'éléments de batterie (10) alignés dans une direction longitudinale du module de batterie (100), chaque élément de batterie (10) comportant un boîtier de batterie (13) et un ensemble de capuchon (14) placé sur le boîtier de batterie (13) ; et
une pluralité de barres omnibus (50) pour relier électriquement les éléments de batterie (10) entre eux, chacune des barres omnibus (50) étant reliée électriquement aux bornes d'élément (11, 12) d'au moins deux éléments de batterie (10),
dans lequel la pluralité de barres omnibus (50) comporte un premier ensemble de barres omnibus (60) et un second ensemble de barres omnibus (70) selon l'une quelconque des revendications 1 à 3,
dans lequel une barre omnibus (65) du premier ensemble de barres omnibus (60) comporte une partie de corps de barre omnibus plane (61) présentant au maximum la hauteur d'une borne d'élément (11, 12) et un pied (62) avec une partie de contact de borne d'élément (63) qui est espacée de la partie de corps de barre omnibus (61) dans une direction de hauteur de celle-ci et avec une partie de pontage (64) qui relie la partie de corps de barre omnibus (61) et la partie de contact de borne d'élément (63) et dans lequel une barre omnibus (65) du premier ensemble de barres omnibus (60) est décalée par rapport à une barre omnibus (75) du second ensemble de barres omnibus (70) de la longueur d'une section de corps (54, 55, 56) des barres omnibus (50, 60, 70) dans la direction longitudinale du module de batterie (100), et
dans lequel chaque barre omnibus du premier ensemble de barres omnibus (60) comporte :
une partie de corps de barre omnibus (51) s'étendant dans une direction d'extension de celle-ci d'une longueur configurée pour relier des bornes d'éléments (11, 12) d'au moins deux éléments de batterie (10) du module de batterie (100) et comportant une première section de corps (54) et une deuxième section de corps (55) espacées l'une de l'autre dans la direction d'extension par une troisième section de corps (56) de la partie de corps de barre omnibus (51) ;
au moins quatre pieds (52, 53) s'étendant à partir de la partie de corps de barre omnibus (51) dans une direction non parallèle à la direction d'extension de la partie de corps de barre omnibus (51) et étant configurés pour relier électriquement la partie de corps de barre omnibus (51) et les bornes d'élément (11, 12) d'éléments de batterie (10) du module de batterie (100),
dans lequel au moins deux pieds (52.1, 52.2) s'étendent à partir de la première section de corps (54), sont séparés l'un de l'autre dans la direction d'extension de la partie de corps de barre omnibus (51) par au moins une première découpe (57) qui est orientée parallèlement aux pieds entre les pieds (52.1, 52.2) et qui s'étend dans la direction d'extension dans la première section de corps (54),
dans lequel au moins deux pieds (53.1, 53.2) s'étendent à partir de la deuxième section de corps (55), sont séparés l'un de l'autre dans la direction d'extension de la partie de corps de barre omnibus (51) par au moins une seconde découpe (58) qui est orientée parallèlement aux pieds entre les pieds (53.1, 53.2) et qui s'étend dans la direction d'extension dans la deuxième section de corps (55), et
dans lequel la longueur de chaque section de corps (54, 55, 56) correspond à l'extension spatiale des au moins deux bornes d'élément (11, 12) respectives reliées à chacune de la première section de corps (54) et de la deuxième section de corps (55) via les au moins deux pieds (52, 53) respectifs ;
et dans lequel une barre omnibus (75) du second ensemble de barres omnibus (70) présente au maximum la hauteur d'une borne d'élément (11, 12).

5. Module de batterie (100) selon la revendication 4, dans lequel le premier ensemble de barres omnibus (60) relie un premier sous-ensemble (15) de la pluralité d'éléments de batterie (10) entre eux et le second ensemble de barres omnibus (70) relie un second sous-ensemble (16) de la pluralité d'éléments de batterie (10) entre eux.

6. Module de batterie (100) selon la revendication 4 ou 5, dans lequel le premier ensemble de barres omnibus (60) est séparé du deuxième ensemble de barres omnibus (70) via au moins une couche électriquement isolante (80) et/ou dans lequel au moins une couche électriquement isolante (80) est disposée en dessous du premier ensemble de barres omnibus (6) et/ou au-dessus du second ensemble de barres omnibus (70) dans une direction de hauteur du module de batterie perpendiculaire à une direction longitudinale et une direction de largeur du module de batterie (100).

7. Module de batterie (100) selon la revendication 6, dans lequel l'au moins une couche électriquement isolante (80) comporte un circuit imprimé flexible (85) enfermé par des couches isolantes externes.
